# EUROPEAN PATENT APPLICATION

(11) **EP 4 729 363 A1**
(43) Date of publication of application: **22.04.2026**
(21) Application number: 24892673.5
(22) Date of filing: 24.04.2024
(51) Int. Cl.: B60R 13/06, B60K 1/04

(54) **SEALING ASSEMBLY FOR VEHICLE, VEHICLE BODY ASSEMBLY, AND VEHICLE**

(30) Priority: 21.11.2023 CN 202311557583
(71) Applicant: Zhejiang Liankong Technologies Co., Ltd., Ningbo, Zhejiang 315336 (CN); Zhejiang Geely Automobile Engineering Technology Development Co., Ltd., Ningbo, Zhejiang 315336 (CN); Zhejiang Geely Holding Group Co., Ltd., Hangzhou, Zhejiang 310051 (CN)
(72) Inventor: CHENG, Qianqian, Hangzhou, Zhejiang 310051 (CN); TANG, Jinming, Hangzhou, Zhejiang 310051 (CN); ZHANG, Lanmin, Hangzhou, Zhejiang 310051 (CN); WANG, Tongling, Hangzhou, Zhejiang 310051 (CN); LI, Lei, Hangzhou, Zhejiang 310051 (CN); YONG, Kuan, Hangzhou, Zhejiang 310051 (CN)
(74) Representative: Boult Wade Tennant LLP
(86) International application number: PCT/CN2024/089674
(87) International publication number: WO 2025/107507

(57) **Abstract**

A sealing assembly (7) of a vehicle, a body assembly (100) of a vehicle, and a vehicle, where at least part of the sealing assembly (7) is adapted to seal a gap between a main body (6) and a battery pack (5); the sealing assembly (7) includes: a first sealing member (77) and a second sealing member (78), the first sealing member (77) has a first sealing portion (771) and a connecting portion (772), the connecting portion (772) is located on a side of the first sealing portion (771) close to the second sealing member (78), and at least part of the connecting portion (772) is located above the second sealing member (78) and connected to the second sealing member (78).

## Description

### CROSS-REFERENCE TO RELATED APPLICATIONS

This application is based on and claims priority to Chinese Patent Application No. 202311557583.3, filed on November 21, 2023, the entire content of which is incorporated hereby into this application as a reference.

### TECHNICAL FIELD

The present application relates to the field of vehicles, and more particularly to a sealing assembly of a vehicle, a body assembly of a vehicle, and a vehicle.

### BACKGROUND

In the related art, the sealing assembly of a vehicle is generally an integrally formed component. An integrally formed sealing assembly can only be adapted to one type of vehicle, resulting in poor versatility of the sealing assembly. Furthermore, when the wheelbase of this type of vehicle is lengthened or shortened, the entire sealing assembly can only be redesigned. Redesigning the entire sealing assembly needs to consume a lot of manpower cost, thereby increasing the production cost of the vehicle.

### SUMMARY

The present application aims to solve at least one of the technical problems in the related art to a certain extent.

Therefore, an object of the present application is to propose a sealing assembly of a vehicle. The sealing assembly of the vehicle has high versatility and good sealing performance.

The present application further proposes a body assembly of a vehicle.

The present application further proposes a vehicle.

According to the sealing assembly of the vehicle of the present application, at least part of the sealing assembly is adapted to be located between a main body of the vehicle and a battery pack of the vehicle to seal a gap between the main body and the battery pack. The sealing assembly includes: a first sealing member and a second sealing member. The first sealing member has a first sealing portion and a connecting portion. The connecting portion is located on a side of the first sealing portion close to the second sealing member. Along a thickness direction of the sealing assembly, at least part of the connecting portion is located above the second sealing member and connected to the second sealing member.

According to the sealing assembly of the vehicle of the present application, by designing the first sealing member to have a structure including the first sealing portion and the connecting portion, and by arranging at least part of the connecting portion located above the second sealing member and connected to the second sealing member, when it is necessary to adapt to vehicle models with different wheelbases, only adaptive adjustment or replacement of the first sealing member or the second sealing member is required to enable the sealing assembly to fit vehicle models with different wheelbases, thereby improving the versatility of the sealing assembly, reducing the production cost of the vehicle, and ensuring the sealing performance of the sealing assembly.

The body assembly of the vehicle according to the present application includes: a main body, which has a mounting notch; a battery pack, which is disposed in the main body and covers the mounting notch, and the battery pack being configured to constitute at least part of a floor of the body assembly; a sealing assembly and a front panel, where the sealing assembly is the aforementioned sealing assembly, and along a length direction of the vehicle, the front panel is located on a front side of the sealing assembly, and the front panel is connected to the sealing assembly to form an annular structure, at least part of the front panel is located between the main body and the battery pack to seal a gap between the main body and the battery pack.

The vehicle according to the present application includes the aforementioned body assembly of the vehicle.

Additional aspects and advantages of the present application will be provided partly in the following description, and partly will become apparent from the following description, or will be learned through practice of the present application.

### BRIEF DESCRIPTION OF DRAWINGS

FIG. 1 is a bottom view of a body assembly according to an embodiment of the present application.
FIG. 2 is an assembly schematic diagram of a front panel and a sealing assembly according to an embodiment of the present application.
FIG. 3 is a schematic diagram of a sealing assembly according to an embodiment of the present application.
FIG. 4 is a cross-sectional schematic diagram of a sealing assembly and a battery pack according to an embodiment of the present application.

The reference numerals in the specification are as follows:
body assembly 100;
sill beam 4; left sill beam 47; right sill beam 48;
battery pack 5; flexible sealing member 55;
main body 6; mounting notch 61; front engine compartment 62; front panel 621; third sealing portion 622; rear floor 63;
sealing assembly 7; boss structure 72; left sealing member 74; right sealing member 76;
first sealing member 77; first sealing portion 771; connecting portion 772; connecting section 773; second sealing member 78; second sealing portion 781; gap space 79;
viscous material layer 80.

### DESCRIPTION OF EMBODIMENTS

The embodiments of the present application are described in detail below. Examples of the embodiments are illustrated in the accompanying drawings, in which the same or similar reference numerals therethroughout refer to the same or similar elements or elements having the same or similar functions. The embodiments described below with reference to the drawings are exemplary and are merely intended to explain the present application, but should not be construed as limiting the present application.

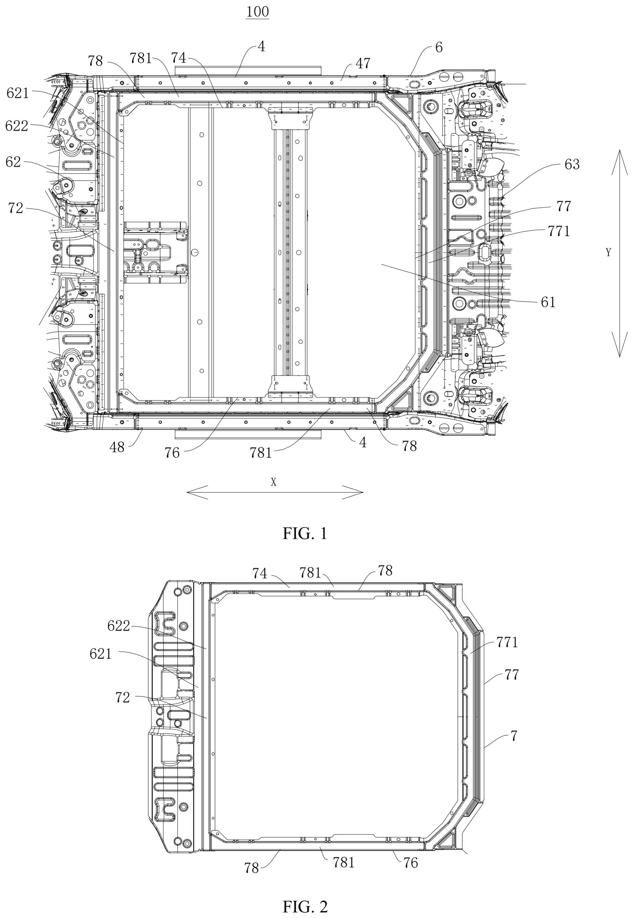

A sealing assembly 7 of a vehicle according to embodiments of the present application is described below with reference to FIGS. 1-4.

As shown in FIGS. 1-4, at least part of the sealing assembly 7 is adapted to be located between a main body 6 of the vehicle and a battery pack 5 of the vehicle to seal a gap between the main body 6 and the battery pack 5.

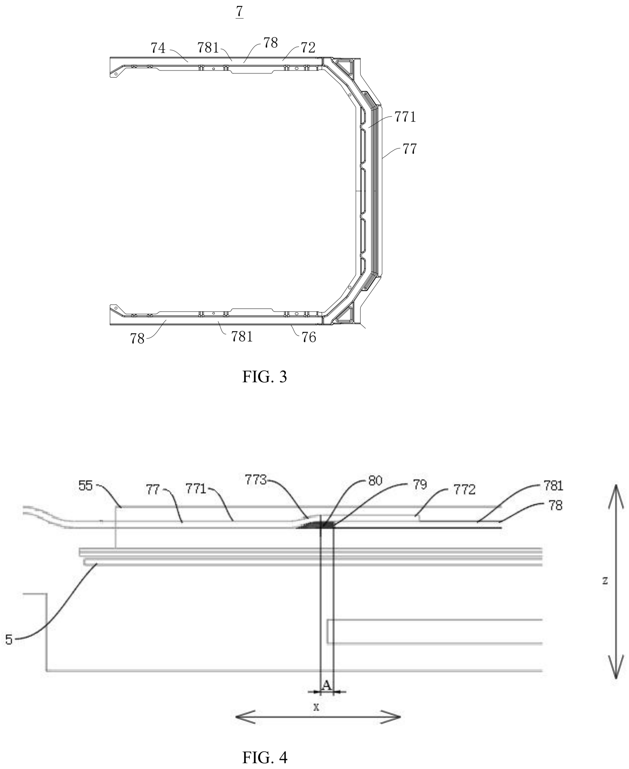

As some optional embodiments of the present application, the main body 6 has a mounting notch 61. The mounting notch 61 may extend through the main body 6 along a height direction of the vehicle (i.e., Z direction shown in FIG. 4). The battery pack 5 is disposed in the main body 6 and covers the mounting notch 61. The battery pack 5 is configured to constitute at least part of a floor of the body assembly 100. As some optional embodiments of the present application, at least part of the structure of the battery pack 5 may be located within the mounting notch 61, and a top cover of the battery pack 5 may be configured as at least part of the floor of the body assembly 100. By providing the main body 6 with the mounting notch 61 and configuring the battery pack 5 to constitute at least part of the floor of the body assembly 100, part of the floor of the conventional body can be eliminated, thereby reducing the weight of the main body 6, which is beneficial for the lightweight design of the vehicle and for increasing the vehicle's driving range.

At least part of the sealing assembly 7 is located between the main body 6 and the battery pack 5. As some optional embodiments of the present application, part of the sealing assembly 7 is located between the main body 6 and the battery pack 5. As some optional embodiments of the present application, the sealing assembly 7 is located between the main body 6 and the battery pack 5. The sealing assembly 7 is capable of sealing the gap between the main body 6 and the battery pack 5.

It should be explained that since the battery pack 5 is configured to constitute at least part of the floor of the body assembly 100, a gap may exist between the battery pack 5 and the main body 6. The presence of the gap between the battery pack 5 and the main body 6 would cause the passenger compartment to communicate with the external environment through this gap. This leads to passengers within the passenger compartment experiencing significant noise, vibration, etc., and also allows a large amount of dust to enter the passenger compartment through the gap between the battery pack 5 and the main body 6, affecting passenger comfort. By using the sealing assembly 7 to seal the gap between the main body 6 and the battery pack 5, the airtightness of the passenger compartment can be improved, and thus the noise and vibration perceived by the passengers inside the passenger compartment can be reduced, and also the entry of a large amount of dust through the gap between the battery pack 5 and the main body 6 into the passenger compartment can be prevented, which is beneficial for improving the riding comfort of the vehicle.

The sealing assembly 7 includes: a first sealing member 77 and a second sealing member 78. The first sealing member 77 has a first sealing portion 771 and a connecting portion 772, where the connecting portion 772 is located on a side of the first sealing portion 771 close to the second sealing member 78, and along the thickness direction of the sealing assembly 7 (i.e., Z direction shown in FIG. 4), at least part of the connecting portion 772 is located above the second sealing member 78, and the connecting portion 772 located above the second sealing member 78 is connected to the second sealing member 78.

It can be understood that, since the first sealing member 77 includes the first sealing portion 771 and the connecting portion 772, and at least part of the connecting portion 772 is located above the second sealing member 78 and connected to the second sealing member 78, when it is necessary to adapt to vehicle models with different wheelbases, only adaptive adjustment or replacement of the first sealing member 77 or the second sealing member 78 is required to enable the sealing assembly 7 to fit the vehicle models with different wheelbases.

For example, the length of the first sealing portion 771 in the length direction of the vehicle (i.e., X direction shown in FIG. 1) can be changed. In this way, only the first sealing member 77 needs to be replaced to adapt to vehicle models with different wheelbases, enabling versatility of the second sealing member 78. Alternatively, the length of the second sealing member 78 in the length direction of the vehicle (i.e., X direction shown in FIG. 1) can be changed. In this way, only the second sealing member 78 needs to be replaced to adapt to vehicle models with different wheelbases, enabling versatility of the first sealing member 77. Alternatively, the first sealing member 77 and the second sealing member 78 can be appropriately separated from or brought close to each other by a certain distance (i.e., relatively away from or relatively close to each other) in the length direction of the vehicle (i.e., X direction shown in FIG. 1), but it should be ensured that at least part of the connecting portion 772 is located above the second sealing member 78. This enables versatility of both the first sealing member 77 and the second sealing member 78, i.e., enabling versatility of the entire sealing assembly 7, but may slightly reduce the sealing performance of the sealing assembly 7 compared to replacing either the first sealing member 77 or the second sealing member 78.

As some optional embodiments of the present application, the number of the first sealing members 77 can be set to two. The two first sealing members 77 can be disposed opposite to and spaced apart from each other along the width direction of the vehicle (i.e., Y direction shown in FIG. 1), and the two first sealing members 77 may be disposed to extend along the length direction of the vehicle (i.e., X direction shown in FIG. 1). In other words, the two first sealing members 77 can be a left sealing member 74 and a right sealing member 76, respectively. The second sealing member 78 can be approximately regarded as a structure extending along the width direction of the vehicle (i.e., Y direction shown in FIG. 1), with both ends of the second sealing member 78 extending along the length direction of the vehicle. The two connecting portions 772 of the two first sealing members 77 can be connected to two ends of the second sealing member 78, respectively.

As some optional embodiments of the present application, as shown in FIGS. 1-3, the number of the second sealing members 78 can be set to two. The two second sealing members 78 can be disposed opposite to and spaced apart from each other along the width direction of the vehicle (i.e., Y direction shown in FIG. 1), and the two second sealing members 78 may be disposed to extend along the length direction of the vehicle (i.e., X direction shown in FIG. 1). In other words, the two second sealing members 78 can be a left sealing member 74 and a right sealing member 76, respectively. Furthermore, both ends of the first sealing member 77 are each provided with a connecting portion 772 along the width direction of the vehicle. The first sealing member 77 can be approximately regarded as a structure extending along the width direction of the vehicle (with both ends of the first sealing member 77 extending along the length direction of the vehicle). The ends of the two second sealing members 78 close to the first sealing member 77 are connected to the two connecting portions 772, respectively.

As some optional embodiments of the present application, as shown in FIG. 4, part of the connecting portion 772 may be located above the second sealing member 78. As some optional embodiments of the present application, the entire connecting portion 772 may be located above the second sealing member 78. As some optional embodiments of the present application, as shown in FIG. 4, the connecting portion 772 and the first sealing portion 771 may be parallel to each other.

Therefore, by designing the first sealing member 77 to have a structure including the first sealing portion 771 and the connecting portion 772, and by arranging at least part of the connecting portion 772 located above the second sealing member 78 and connected to the second sealing member 78, when it is necessary to adapt to vehicle models with different wheelbases, only adaptive adjustment or replacement of the first sealing member 77 or the second sealing member 78 is required to enable the sealing assembly 7 to fit the vehicle models with different wheelbases, thereby improving the versatility of the sealing assembly 7, which is beneficial for reducing the production cost of the vehicle, and ensuring the sealing performance of the sealing assembly 7.

In some embodiments of the present application, a sealing layer may be disposed between the connecting portion 772 and the second sealing member 78 along the thickness direction of the sealing assembly 7. Specifically, a sealing layer may be disposed between the connecting portion 772 located above the second sealing member 78 and the second sealing member 78.

As some optional embodiments of the present application, the sealing layer can be, but is not limited to, rubber type, resin type, oil-based type, wet air vulcanized type, or chemical vulcanized type sealant, etc. The sealant has viscosity. By disposing the sealant between the connecting portion 772 located above the second sealing member 78 and the second sealing member 78, the connecting portion 772 and the second sealing member 78 can be bonded together by the sealant. Furthermore, the sealant provides a sealing function, thereby effectively improving the sealing performance of the sealing assembly 7, which is beneficial for enhancing the riding comfort of the vehicle.

As some optional embodiments of the present application, the sealing layer can be a flexible sealing member (e.g., foam). Foam can be disposed between the connecting portion 772 located above the second sealing member 78 and the second sealing member 78. Then, the connecting portion 772 and the second sealing member 78 are connected by means such as, but not limited to, screwing, riveting, or snap-fitting. This enables the foam to be compressed between the connecting portion 772 and the second sealing member 78, thereby effectively improving the sealing performance of the sealing assembly 7, which is beneficial for enhancing the riding comfort of the vehicle.

In some embodiments of the present application, as shown in FIG. 4, along the thickness direction of the sealing assembly 7 (i.e., Z direction shown in FIG. 4, namely, the height direction of the vehicle), the sealing assembly 7 is adapted to be located above the battery pack 5. In other words, the battery pack 5 can be disposed below the sealing assembly 7. The lower surface of the first sealing portion 771 and the lower surface of the second sealing member 78 are both adapted to seal against the battery pack 5. As some optional embodiments of the present application, the upper surface of the battery pack 5 can seal against the lower surface of the first sealing portion 771 and the lower surface of the second sealing member 78. This arrangement ensures a reasonable relative position between the sealing assembly 7 and the battery pack 5, which contributes to enhancing the sealing effect of the sealing assembly 7.

In some embodiments of the present application, as shown in FIG. 4, the lower surface of the first sealing portion 771 and the lower surface of the second sealing member 78 may be coplanar. As some optional embodiments of the present application, the upper surface of the battery pack 5 may be configured as a sealing surface. This sealing surface can be adapted to match the lower surface of the first sealing portion 771 and the lower surface of the second sealing member 78. It will be understood that if the sealing surface is parallel to a horizontal plane, then the lower surface of the first sealing portion 771 and the lower surface of the second sealing member 78 are both parallel to the horizontal plane and the lower surface of the first sealing portion 771 and the lower surface of the second sealing member 78 are coplanar. If there is an angle between the sealing surface and the horizontal plane, then the lower surface of the first sealing portion 771 and the lower surface of the second sealing member 78 both form an included angle with the horizontal plane, and the lower surface of the first sealing portion 771 and the lower surface of the second sealing member 78 are coplanar. Furthermore, the angle between the sealing surface and the horizontal plane, the angle between the lower surface of the first sealing portion 771 and the horizontal plane, and the angle between the lower surface of the second sealing member 78 and the horizontal plane are identical. By making the lower surface of the first sealing portion 771 and the lower surface of the second sealing member 78 coplanar, it is beneficial to improve the sealing effect of the sealing assembly 7.

In some embodiments of the present application, as shown in FIG. 4, the first sealing member 77 may further include a connecting section 773. The connecting section 773 may be connected between the first sealing portion 771 and the connecting portion 772, so that the first sealing portion 771 and the connecting portion 772 are offset from each other along the thickness direction of the sealing assembly 7. Specifically, an end of the connecting section 773 close to the first sealing portion 771 may be connected to the first sealing portion 771, and an end of the connecting section 773 close to the connecting portion 772 may be connected to the connecting portion 772.

As some optional embodiments of the present application, the connecting section 773 may be a straight section. Furthermore, an angle exists between the connecting section 773 and the connecting portion 772, and between the connecting section 773 and the first sealing portion 771, thereby offsetting the first sealing portion 771 and the connecting portion 772 along the thickness direction of the sealing assembly 7. In other words, the connecting section 773 may be an inclined straight section. As some optional embodiments of the present application, the connecting section 773 may be an arc-shaped section, which can also achieve the offset between the first sealing portion 771 and the connecting portion 772 along the thickness direction of the sealing assembly 7.

Regarding the offset between the first sealing portion 771 and the connecting portion 772 along the thickness direction of the sealing assembly 7, it can be understood as: setting a plane perpendicular to the length direction of the vehicle (i.e., X direction shown in FIG. 1), the orthogonal projection of the first sealing portion 771 onto this plane and the orthogonal projection of the connecting portion 772 onto this plane do not completely coincide, or the orthogonal projection of the first sealing portion 771 onto this plane and the orthogonal projection of the connecting portion 772 onto this plane have no overlapping area.

As some optional embodiments of the present application, as shown in FIG. 4, the lower surface of the connecting portion 772 may be higher than the lower surface of the first sealing portion 771. It will be understood that, in embodiments where the sealing surface of the battery pack 5 is parallel to the horizontal plane, the lower surfaces of both the first sealing portion 771 and the second sealing member 78 are parallel to the horizontal plane and the lower surfaces of both the first sealing portion 771 and the second sealing member 78 are coplanar, only by arranging the lower surface of the connecting portion 772 to be higher than the lower surface of the first sealing portion 771, can both the lower surface of the first sealing portion 771 and the lower surface of the second sealing member 78 be parallel to the horizontal plane and coplanar with each other. This configuration helps improve the sealing performance of the sealing assembly 7, thereby enhancing the riding comfort of the vehicle.

As some optional embodiments of the present application, the first sealing member 77 may be an integrally formed component. This can reduce the manufacturing difficulty of the first sealing member 77 and improve the production efficiency of the first sealing member 77.

In some embodiments of the present application, as shown in FIG. 4, there may be a gap space 79 between the first sealing portion 771 and the second sealing member 78 along the length direction of the vehicle (i.e., X direction shown in FIG. 1). A viscous material layer 80 may be disposed within the gap space 79. It should be noted that at least part of the gap space 79 is located below the connecting section 773.

Specifically, as some optional embodiments of the present application, the entire gap space 79 may be located below the connecting section 773. In such embodiments, the end of the second sealing member 78 close to the first sealing portion 771 and the end of the connecting portion 772 close to the first sealing portion 771 are aligned in the thickness direction of the sealing assembly 7 (i.e., Z direction shown in FIG. 4). In other words, along the length direction of the vehicle (i.e., X direction shown in FIG. 1), a distance between the end of the second sealing member 78 close to the first sealing portion 771 and the first sealing portion 771 is equal to a distance between the end of the connecting portion 772 close to the first sealing portion 771 and the first sealing portion 771.

As some optional embodiments of the present application, one part of the gap space 79 may be located below the connecting section 773, and the other part of the gap space 79 may be located below the connecting portion 772. In such embodiments, along the length direction of the vehicle (i.e., X direction shown in FIG. 1), the distance between the end of the second sealing member 78 close to the first sealing portion 771 and the first sealing portion 771 is greater than the distance between the end of the connecting portion 772 close to the first sealing portion 771 and the first sealing portion 771.

Where, the viscous material layer 80 is formed by a viscous material, which may include, but is not limited to, rubber type, resin type, oil-based type, wet air vulcanized type, or chemical vulcanized type sealant, etc. By disposing the viscous material layer 80 within the gap space 79, the sealing performance of the sealing assembly 7 can be effectively improved.

In some embodiments of the present application, as shown in FIG. 4, the lower surface of the viscous material layer 80 may be coplanar with the lower surface of the first sealing portion 771. As some optional embodiments of the present application, the lower surface of the viscous material layer 80 may be made coplanar with the lower surface of the first sealing portion 771 by scraping. As some optional embodiments of the present application, the lower surface of the viscous material layer 80, the lower surface of the first sealing portion 771, and the lower surface of the second sealing member 78 may all be parallel to the horizontal plane, and the lower surface of the viscous material layer 80, the lower surface of the first sealing portion 771, and the lower surface of the second sealing member 78 may be coplanar. Such an arrangement can more effectively enhance the sealing performance of the sealing assembly 7 and effectively ensure water sealing between the main body 6 and the battery pack 5.

In some embodiments of the present application, as shown in FIG. 4, along the length direction of the vehicle (i.e., X direction shown in FIG. 1), the distance between the end of the second sealing member 78 close to the first sealing portion 771 and the end of the connecting portion 772 close to the first sealing portion 771 is defined as A, where A may satisfy the relationship: 0 mm ≤ A ≤ 5 mm. That is, A can be, but is not limited to, any value between 0 mm and 5 mm, such as 0 mm, 1 mm, 2 mm, 3 mm, 4 mm, 5 mm, etc. Such a setting may ensure a reasonable distance between the end of the second sealing member 78 close to the first sealing portion 771 and the end of the connecting portion 772 close to the first sealing portion 771, thereby guaranteeing the sealing performance of the sealing assembly 7 and contributing to improving riding comfort of the vehicle.

In some embodiments of the present application, the number of the first sealing member 77 can be set to two. The two first sealing members 77 can be disposed opposite to and spaced apart from each other along the width direction of the vehicle (i.e., Y direction shown in FIG. 1), and the two first sealing members 77 may be disposed to extend along the length direction of the vehicle (i.e., X direction shown in FIG. 1). In other words, the two first sealing members 77 can be a left sealing member 74 and a right sealing member 76, respectively. The second sealing member 78 can be approximately regarded as a structure extending along the width direction of the vehicle (i.e., Y direction shown in FIG. 1), with both ends of the second sealing member 78 extending along the length direction of the vehicle. The two connecting portions 772 of the two first sealing members 77 can be connected to both ends of the second sealing member 78 respectively. Such an arrangement can seal the gap between the main body 6 and the battery pack 5, and enhance the airtightness of the passenger compartment, thereby improving the riding comfort of the vehicle.

In some embodiments of the present application, as shown in FIGS. 1-3, the number of the second sealing member 78 can be set to two. The two second sealing members 78 can be disposed opposite to and spaced apart from each other along the width direction of the vehicle (i.e., Y direction shown in FIG. 1), and the two second sealing members 78 may be disposed to extend along the length direction of the vehicle (i.e., X direction shown in FIG. 1). In other words, the two second sealing members 78 can be a left sealing member 74 and a right sealing member 76, respectively. Furthermore, both ends of the first sealing member 77 are provided with the connecting portion 772 along the width direction of the vehicle. The first sealing member 77 can be approximately regarded as a structure extending along the width direction of the vehicle (with both ends of the first sealing member 77 extending along the length direction of the vehicle). The ends of the two second sealing members 78 close to the first sealing member 77 are connected to the two connecting portions 772 respectively. Such a configuration can seal the gap between the main body 6 and the battery pack 5, enhance the airtightness of the passenger compartment, and thus improve the riding comfort of the vehicle.

In some embodiments of the present application, as shown in FIG. 4, the sealing assembly 7 may further include a flexible sealing member 55. The flexible sealing member 55 is adapted to be clamped between the battery pack 5 and the sealing assembly 7. Specifically, the flexible sealing member 55 may be clamped between the lower surface of the first sealing portion 771 and the upper surface of the battery pack 5, and between the lower surface of the second sealing member 78 and the upper surface of the battery pack 5. By disposing the flexible sealing member 55 between the battery pack 5 and the sealing assembly 7, the flexible sealing member 55 is compressed by the battery pack 5 and the sealing assembly 7. The compressed flexible sealing member 55 can provide a good sealing effect.

The body assembly 100 of the vehicle according to embodiments of the present application is described below with reference to FIGS. 1-4.

As shown in FIGS. 1-4, the body assembly 100 according to embodiments of the present application includes: a main body 6, a battery pack 5, a sealing assembly 7, and a front panel 621.

The main body 6 has a mounting notch 61. The mounting notch 61 may extend through the main body 6 along a height direction of the vehicle (i.e., Z direction shown in FIG. 4). The battery pack 5 is disposed in the main body 6 and covers the mounting notch 61. The battery pack 5 is configured to constitute at least part of a floor of the body assembly 100. As some optional embodiments of the present application, at least part of the structure of the battery pack 5 may be located within the mounting notch 61, and a top cover of the battery pack 5 may be configured as at least part of the floor of the body assembly 100. By providing the main body 6 with the mounting notch 61 and configuring the battery pack 5 to constitute at least part of the floor of the body assembly 100, part of the floor of the conventional body of vehicle can be eliminated, thereby reducing the weight of the main body 6, which is beneficial for the lightweight design of the vehicle and for increasing the vehicle's driving range.

Along a length direction of the main body 6 (i.e., X direction shown in FIG. 1), the front panel 621 is located on a front side of the sealing assembly 7, and the front panel 621 is connected to the sealing assembly 7 to form an annular structure. At least part of the front panel 621 is located between the main body 6 and the battery pack 5. As some optional embodiments of the present application, part of the front panel 621 is located between the main body 6 and the battery pack 5. As some optional embodiments of the present application, the front panel 621 is located between the main body 6 and the battery pack 5. The front panel 621 is capable of sealing the gap between the main body 6 and the battery pack 5.

By using the sealing assembly 7 and the front panel 621 to seal the gap between the main body 6 and the battery pack 5, the airtightness of the passenger compartment can be improved. In this way, the noise and vibration perceived by passengers inside the passenger compartment can be reduced, and the entry of a large amount of dust through the gap between the battery pack 5 and the main body 6 into the passenger compartment can be prevented. This is beneficial for improving the riding comfort of the vehicle.

Furthermore, by connecting the sealing assembly 7 and the front panel 621 to form an annular structure, the gap between the main body 6 and the battery pack 5 can be reliably sealed.

Furthermore, by designing the first sealing member 77 to have a structure including the first sealing portion 771 and the connecting portion 772, and by arranging at least part of the connecting portion 772 located above the second sealing member 78 and connected to the second sealing member 78, when it is necessary to adapt to vehicle models with different wheelbases, only adaptive adjustment or replacement of the first sealing member 77 or the second sealing member 78 is required to enable the sealing assembly 7 to fit the vehicle models with different wheelbases, thereby improving the versatility of the sealing assembly 7, which is conductive to reducing the production cost of the vehicle, and ensuring the sealing performance of the sealing assembly 7.

As some optional embodiments of the present application, the battery pack 5 can serve as the front floor of the body assembly 100.

As a specific embodiment of the present application, as shown in FIGS. 1-3, the number of second sealing members 78 can be set to two. The two second sealing members 78 are disposed opposite to and spaced apart from each other along the width direction of the vehicle (i.e., Y direction shown in FIG. 1), and the two second sealing members 78 may be disposed to extend along the length direction of the vehicle (i.e., X direction shown in FIG. 1). In other words, the two second sealing members 78 are a left sealing member 74 and a right sealing member 76, respectively. Furthermore, both ends of the first sealing member 77 are provided with the connecting portion 772 along the width direction of the vehicle. The first sealing member 77 can be approximately regarded as a structure extending along the width direction of the vehicle (with both ends of the first sealing member 77 extending along the length direction of the vehicle). The ends of the two second sealing members 78 close to the first sealing member 77 are connected to the two connecting portions 772 respectively, and the ends of the two second sealing members 78 close to the front panel 621 are connected to both ends of the front panel 621 respectively. In other words, the front panel 621, the left sealing member 74, the first sealing member 77, and the right sealing member 76 can be connected sequentially end to end.

Specifically, one end of the front panel 621 may be connected to one end of the left sealing member 74, the other end of the left sealing member 74 may be connected to one end of the first sealing member 77, the other end of the first sealing member 77 may be connected to one end of the right sealing member 76, and the other end of the right sealing member 76 may be connected to the other end of the front panel 621. At least one of the left sealing member 74, the first sealing member 77, and the right sealing member 76 may be connected to the main body 6. As some optional embodiments of the present application, the left sealing member 74, the first sealing member 77, and the right sealing member 76 may all be connected to the main body 6.

The lower surface of the first sealing portion 771, the lower surface of the second sealing member 78, and the lower surface of the front panel 621 are coplanar. Furthermore, the lower surface of the first sealing portion 771, the lower surface of the second sealing member 78, and the lower surface of the front panel 621 are all parallel to the horizontal plane, and the connecting portion 772 is parallel to the first sealing portion 771. Along the length direction of the vehicle (i.e., X direction shown in FIG. 1), there is a gap space 79 between the first sealing portion 771 and the second sealing member 78. A viscous material layer 80 is disposed within the gap space 79, and the lower surface of the viscous material layer 80 is coplanar with the lower surface of the first sealing portion 771. Such an arrangement can improve the airtightness of the passenger compartment, thereby reducing the noise and vibration perceived by passengers inside the passenger compartment and enhancing the riding comfort of the vehicle.

In some embodiments of the present application, as shown in FIGS. 1-4, the front panel 621 may be formed with a third sealing portion 622 protruding toward the battery pack 5, the second sealing member 78 may be formed with a second sealing portion 781 protruding toward the battery pack 5, the first sealing member 77 may be formed with the first sealing portion 771 protruding toward the battery pack 5. The first sealing portion 771, the second sealing portion 781, and the third sealing portion 622 cooperate to form an annular boss structure 72. The lower surface of the boss structure 72 can seal against the battery pack 5. Such an arrangement is conducive to further improving the sealing effect of the sealing assembly 7 and the front panel 621.

In some embodiments of the present application, the sealing assembly 7 may be located within the mounting notch 61. Along the thickness direction of the sealing assembly 7 (i.e., Z direction shown in FIG. 4), a distance between the sealing assembly 7 and the upper end of the mounting notch 61 may be less than a distance between the sealing assembly 7 and the lower end of the mounting notch 61.

By disposing the sealing assembly 7 within the mounting notch 61, the sealing assembly 7 can be arranged in a reasonable position. Furthermore, by disposing the sealing assembly 7 such that the distance between the sealing assembly 7 and the upper end of the mounting notch 61 is less than the distance between the sealing assembly 7 and the lower end of the mounting notch 61, the sealing assembly 7 can be located in the upper-middle portion of the mounting notch 61. This provides a larger space for the battery pack 5, which is beneficial for increasing the capacity of the battery pack 5 and thereby extending the driving range of the vehicle.

In some embodiments of the present application, as shown in FIGS. 1 and 2, the main body 6 may include a front engine compartment 62, a rear floor 63, a left sill beam 47, and a right sill beam 48. The front engine compartment 62 may be connected to the left sill beam 47 and the right sill beam 48, and the rear floor 63 may be connected to the left sill beam 47 and the right sill beam 48. Along the length direction of the vehicle (i.e., X direction shown in FIG. 1), the front engine compartment 62 may be disposed in front of the rear floor 63, both the left sill beam 47 and the right sill beam 48 may be disposed between the front engine compartment 62 and the rear floor 63, and both the left sill beam 47 and the right sill beam 48 may be disposed to extend along the length direction of the vehicle. Along the width direction of the vehicle (i.e., Y direction shown in FIG. 1), the left sill beam 47 and the right sill beam 48 may be disposed spaced apart. The front engine compartment 62, the rear floor 63, the left sill beam 47, and the right sill beam 48 may collectively define the mounting notch 61. This configuration allows the mounting notch 61 to have a relatively large size, which is conducive to the lightweight design of the vehicle. Moreover, by having the front engine compartment 62, the rear floor 63, the left sill beam 47, and the right sill beam 48 collectively define the mounting notch 61, the mounting notch 61 can be in a reasonable position, so that the battery pack 5 can be arranged in a reasonable position, reducing the impact of the battery pack 5 on the space of the vehicle's trunk.

In some embodiments of the present application, as shown in FIG. 1, the left sealing member 74 may be connected to the left sill beam 47. As some optional embodiments of the present application, the left sealing member 74 may be disposed on a side of the left sill beam 47 close to the right sill beam 48. The left sealing member 74 may have a left connecting flange, and the left connecting flange may be welded to the left sill beam 47. The right sealing member 76 may be connected to the right sill beam 48. As some optional embodiments of the present application, the right sealing member 76 may be disposed on a side of the right sill beam 48 close to the left sill beam 47. The right sealing member 76 may have a right connecting flange, and the right connecting flange may be welded to the right sill beam 48. The front panel 621 may be connected to the front engine compartment 62, and the first sealing member 77 may be connected to the rear floor 63. Such a configuration may enhance connection firmness between the sealing assembly 7 and the main body 6, reduces the probability of separation between the sealing assembly 7 and the main body 6, and thereby reliably seals the gap between the main body 6 and the battery pack 5.

As some optional embodiments of the present application, the sealing assembly 7 may be connected to the main body 6 by welding.

The vehicle according to the embodiments of the present application includes the aforementioned body assembly 100. By designing the first sealing member 77 to have a structure including the first sealing portion 771 and the connecting portion 772, and by arranging at least part of the connecting portion 772 located above the second sealing member 78 and connected to the second sealing member 78, when it is necessary to adapt to vehicle models with different wheelbases, only adaptive adjustment or replacement of the first sealing member 77 or the second sealing member 78 is required to enable the sealing assembly 7 to fit the vehicle models with different wheelbases, thereby improving the versatility of the sealing assembly 7, which is conductive to reducing the production cost of the vehicle, and ensuring the sealing performance of the sealing assembly 7.

In the description of the present application, it should be understood that the orientation or positional relationships indicated by terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on the orientation or positional relationships shown in the accompanying drawings. These terms are used merely for the convenience of describing the present application and simplifying the description, and do not indicate or imply that the referred apparatus or element must have a specific orientation or be constructed and operated in a specific orientation. Therefore, they should not be construed as limiting the present application.

In the description of the present application, the terms "first feature" and "second feature" may include one or more such features.

In the description of the present application, the term "a plurality of" means two or more.

In the description of the present application, a first feature being "on" or "under" a second feature may include the case where the first feature and the second feature are in direct contact, or the case where the first feature and the second feature are in contact through an additional feature between them, rather than direct contact.

In the description of the present application, a first feature being "on", "above", or "over" a second feature includes the first feature being directly above or obliquely above the second feature, or merely indicates that the horizontal level of the first feature is higher than that of the second feature.

In the description of this specification, the description with references to terms such as "one embodiment," "some embodiments," "an exemplary embodiment," "an example," "a specific example," or "some examples" mean that specific features, structures, materials, or characteristics described in combination with the embodiment(s) or example(s) are included in at least one embodiment or example of the present application. In this specification, schematic expressions of the above terms do not necessarily refer to the same embodiment or example. Furthermore, the described specific features, structures, materials, or characteristics may be combined in an suitable manner in any one or more embodiments or examples.

Although embodiments of the present application have been shown and described, persons of ordinary skill in the art can understand that various changes, modifications, substitutions, and variations can be made to these embodiments without departing from the principles and spirit of the present application. The scope of the present application is defined by the claims and their equivalents.

## Claims

1. A sealing assembly of a vehicle, wherein at least part of the sealing assembly is adapted to be located between a main body of the vehicle and a battery pack of the vehicle to seal a gap between the main body and the battery pack;
the sealing assembly comprises: a first sealing member and a second sealing member, the first sealing member has a first sealing portion and a connecting portion, the connecting portion is located on a side of the first sealing portion close to the second sealing member, and along a thickness direction of the sealing assembly, at least part of the connecting portion is located above the second sealing member and connected to the second sealing member.

2. The sealing assembly of the vehicle according to claim 1, wherein along the thickness direction of the sealing assembly, the sealing assembly is adapted to be located above the battery pack, and a lower surface of the first sealing portion and a lower surface of the second sealing member are both adapted to seal against the battery pack.

3. The sealing assembly of the vehicle according to claim 2, wherein the lower surface of the first sealing portion and the lower surface of the second sealing member are coplanar.

4. The sealing assembly of the vehicle according to any one of claims 1 to 3, wherein the first sealing member further comprises a connecting section, the connecting section is connected between the first sealing portion and the connecting portion so that the first sealing portion and the connecting portion are offset from each other along the thickness direction of the sealing assembly.

5. The sealing assembly of the vehicle according to any one of claims 1 to 4, wherein there is a gap space between the first sealing portion and the second sealing member along a length direction of the vehicle, and a viscous material layer is provided within the gap space.

6. The sealing assembly of the vehicle according to claim 5, wherein a lower surface of the viscous material layer is coplanar with the lower surface of the first sealing portion.

7. The sealing assembly of the vehicle according to any one of claims 1 to 6, wherein along a length direction of the vehicle, a distance between an end of the second sealing member close to the first sealing portion and an end of the connecting portion close to the first sealing portion is defined as A, satisfying the relationship: 0 mm ≤ A ≤ 5 mm.

8. The sealing assembly of the vehicle according to any one of claims 1 to 7, wherein there are two first sealing members, the two first sealing members are disposed opposite to and spaced apart from each other along the width direction of the vehicle, and two connecting portions are connected to both ends of the second sealing member respectively.

9. The sealing assembly of the vehicle according to any one of claims 1 to 8, wherein there are two second sealing members, the two second sealing members are disposed opposite to and spaced apart from each other along the width direction of the vehicle, both ends of the first sealing member each have the connecting portion along the width direction of the vehicle, and ends of the two second sealing members close to the first sealing member are connected to the two connecting portions respectively.

10. The sealing assembly of the vehicle according to any one of claims 1 to 9, further comprising a flexible sealing member, wherein the flexible sealing member is adapted to be clamped between the battery pack and the sealing assembly.

11. The sealing assembly of the vehicle according to any one of claims 1 to 10, wherein a sealing layer is disposed between the connecting portion and the second sealing member along the thickness direction of the sealing assembly.

12. A body assembly of a vehicle, comprising:
a main body, which has a mounting notch;
a battery pack, which is disposed in the main body and covers the mounting notch, wherein the battery pack is configured to constitute at least part of a floor of the body assembly;
a sealing assembly and a front panel, wherein the sealing assembly is the sealing assembly according to any one of claims 1 to 11, the front panel is located on a front side of the sealing assembly along a length direction of the vehicle and the front panel is connected to the sealing assembly to form an annular structure, and at least part of the front panel is located between the main body and the battery pack to seal a gap between the main body and the battery pack.

13. The body assembly of the vehicle according to claim 12, wherein the front panel is formed with a third sealing portion protruding toward the battery pack, the second sealing member is formed with a second sealing portion protruding toward the battery pack, and the first sealing portion, the second sealing portion and the third sealing portion cooperate to form an annular boss structure, a lower surface of the boss structure seals against the battery pack.

14. The body assembly of the vehicle according to claim 12 or 13, wherein the sealing assembly is located within the mounting notch, and along the thickness direction of the sealing assembly, a distance between the sealing assembly and an upper end of the mounting notch is less than a distance between the sealing assembly and a lower end of the mounting notch.

15. A vehicle, comprising the body assembly of the vehicle according to any one of claims 12 to 14.
